# EUROPÄISCHE PATENTSCHRIFT

(11) **EP 4 495 036 B1**
(45) Veröffentlichungstag und Bekanntmachung des Hinweises auf die Patenterteilung: **05.11.2025**
(21) Anmeldenummer: 24189470.8
(22) Anmeldetag: 18.07.2024
(51) Int. Cl.: B65G 53/46, F16K 5/04, B65G 53/56, F16K 11/085

(54) **SCHÜTTGUT-WEICHE**
BULK MATERIAL SWITCH
AIGUILLAGE POUR MATIÈRES EN VRAC

(30) Priorität: 20.07.2023 DE 102023206883
(43) Veröffentlichungstag der Anmeldung: 22.01.2025
(73) Patentinhaber: Coperion GmbH, 70469 Stuttgart (DE)
(72) Erfinder: Schädler, Manfred, 88213 Ravensburg (DE); Rolser, Luca, 88339 Bad Waldsee (DE); Dürr, Michael, 88364 Wolfegg (DE); Zinser, Bruno, 88289 Waldburg (DE)
(74) Vertreter: Rau, Schneck & Hübner Patentanwälte Rechtsanwälte PartGmbB

(56) Entgegenhaltungen:
- DE-A1- 102016 004 495
- DE-A1- 19 952 435
- DE-A1- 3 911 424
- DE-B4- 102017 117 601

## Beschreibung

Die Erfindung betrifft eine Schüttgut-Weiche für die Schüttgut-Förderung.

DE 34 14 0741 A1 offenbart eine Ringdichtung, die zur Abdichtung eines Durchgangskanals eines Drehteils in einem Gehäuse der Schüttgut-Weiche dient. Die Ringdichtung weist eine Kerbe für verbesserte Dichtungseigenschaften auf. Es hat sich gezeigt, dass, insbesondere bei niedrigen Förderdrücken, nicht sichergestellt ist, dass die auf die Ringdichtung wirkenden Druckkräfte den Spalt zwischen Gehäuse und Drehteil zuverlässig verschließen. Insbesondere ein Schalten der Weiche, also beim Drehen des Drehteils, kann Schüttgut in die Dichtungsnut gelangen und insbesondere die Ringdichtung aus der Dichtungsnut herausziehen. Eine höhere Anpressung der Dichtung in der Dichtungsnut ist wegen des damit verbundenen Abriebs der Dichtung unerwünscht. Abrieb führt zu einem schnelleren Verschleiß der Dichtung und zu einer Verunreinigung des geförderten Schüttguts. Die Dichtung in der Dichtungsnut zu verkleben, ist mit Blick auf einen Austausch der Dichtung und der kaum vorhersagbaren Haltedauer der Klebeverbindung nachteilig.

EP 0 344 584 B1 und DE 199 52 435 A1 offenbaren Schüttgut-Weichen mit Dichtungen, die in Folge einer Druckbeaufschlagung zusätzlich in eine Dichtungsnut bzw. an eine Dichtungsfläche und/oder in einen Dichtungsspalt eingepresst werden. Für die Druckbeaufschlagung der Dichtung sind komplexe Druckkanäle erforderlich. Der Aufbau einer derartigen Schüttgut-Weiche ist aufwändig und kompliziert.

DE 39 11 424 offenbart eine Schüttgut-Weiche nach dem Oberbegriff des Anspruchs 1.

Es ist die Aufgabe der vorliegenden Erfindung, die Abdichtung eines Drehteils im Gehäuse einer Schüttgut-Weiche zu verbessern und insbesondere eine zuverlässige Abdichtung unkompliziert zu gewährleisten.

Diese Aufgabe ist erfindungsgemäß gelöst durch eine Schüttgut-Weiche mit den im Anspruch 1 angegebenen Merkmalen.

Erfindungsgemäß wurde erkannt, dass ein Drehteil in einem Gehäuse einer Schüttgut-Weiche, insbesondere in Drehrichtung des Drehteils, umfangsseitig vorteilhaft abdichtbar ist. Die Schüttgut-Weiche ermöglicht eine verbesserte Schüttgutförderung, insbesondere entlang einer Förderleitung, insbesondere in einem Rohrfördersystem für Schüttgut. Eine derartige Schüttgutförderung ist beispielsweise die pneumatische Schüttgutförderung, insbesondere die Schüttgutförderung mittels eines druckbeaufschlagten Fluids. Das Fluid kann ein Gas, insbesondere Luft, und/oder eine Flüssigkeit sein. Insbesondere umfasst die Schüttgutförderung die pneumatische Schüttgutförderung, insbesondere die pneumatische Feuchtförderung von Schüttgut, also durch Hinzufügung einer Flüssigkeit, insbesondere Wasser und/oder Wasserdampf, sowie die hydraulische Schüttgutförderung, insbesondere mittels Wasser. Die Schüttgut-Weiche ist insbesondere mit Druck oder mit Unterdruck beaufschlagt.

Eine Dichtungsanordnung zur umfangsseitigen Abdichtung des Drehteils umfasst mindestens ein Dichtungselement, das insbesondere aus einem Dichtungsmaterial hergestellt ist, das elastisch deformierbar ist. Das Dichtungsmaterial ist insbesondere ein Kunststoffmaterial, insbesondere ein Elastomer und insbesondere Silikonkautschuk. Das mindestens eine Dichtungselement verläuft umfangsseitig an dem Drehteil. Das mindestens eine Dichtungselement ist zumindest abschnittsweise in Umfangsrichtung bezüglich einer Drehachse des Drehteils orientiert. Bezüglich der Drehachse weist das Drehteil eine zylindrische oder kegelstumpfförmige Geometrie auf. Das mindestens eine Dichtungselement ist in einer stirnseitigen Vertiefung, insbesondere beidseitig, an dem Drehteil angeordnet. Die stirnseitige Vertiefung bildet insbesondere einen umlaufenden Absatz. Die stirnseitige Vertiefung ist als außenliegende, ringförmige und insbesondere vollständig umlaufende Vertiefung an einer außenliegenden Stirnwand des Drehteils ausgebildet.

Es wurde überraschend gefunden, dass das mindestens eine Dichtungselement in der stirnseitigen Vertiefung des Drehteils mittels mindestens eines Spannelements zuverlässig gehalten ist. Insbesondere ist das Spannelement lösbar an dem Drehteil befestigt, insbesondere angeschraubt. Mit dem Spannelement kann eine Breite der Vertiefung, die eine Nutbreite entspricht, derart eingestellt werden, dass sie kleiner ist als eine Ausgangsbreite des Dichtungselements im unmontierten Zustand. Insbesondere kann durch die Festlegung der Geometrie des Spannelements, insbesondere durch die Festlegung einer Dicke eines Ringabsatzes des Spannelements, die resultierende Nutbreite und damit die auf das Dichtungselement wirkende Klemmkraft festgelegt werden. Das Dichtungselement ist insbesondere in axialer Richtung der Drehachse elastisch vorgespannt in der Vertiefung gehalten. Das Dichtungselement ist axial geklemmt. Ein unerwünschtes Herausverlagern des Dichtungselements aus der Vertiefung in einer Richtung quer und insbesondere senkrecht zur Drehachse des Drehteils ist dadurch zuverlässig und unaufwändig sichergestellt. Das Spannelement bildet eine mechanische Fixierung des Dichtungselements. Die mechanische Fixierung ist robust.

Erfindungsgemäß wurde insbesondere erkannt, dass die zusätzlichen Fixierungsmaßnahmen, die zum Halten des mindestens einen Dichtungselements in der Vertiefung dienen, besonders vorteilhaft für die umfangsseitig angeordnete Dichtungsanordnung anwendbar sind. Insbesondere ist die mechanische Fixierung zur umfangsseitigen Abdichtung des Drehteils unkompliziert umsetzbar und insbesondere an dem Drehteil, insbesondere mittels Funktionsintegration, unaufwändig integrierbar.

Das Gehäuse weist insbesondere einen Innenraum auf, in den das Drehteil eingesetzt ist. Die Innenkontur des Innenraums korrespondiert zu der Außenkontur des Drehteils. Um eine Drehbewegung des Drehteils im Gehäuse zu vereinfachen, ist es vorteilhaft, wenn ein definierter Spalt, der sich insbesondere anteilig in radialer Richtung bezüglich der Drehachse des Drehteils erstreckt, zwischen der Außenkontur des Drehteils und der Innenkontur des Innenraums vorhanden ist. Insbesondere ist dadurch der Schaltvorgang des Drehteils vereinfacht. Das Drehteil ist bezüglich der Drehachse insbesondere zylindrisch oder kegelstumpfförmig ausgeführt. Entsprechend ist die Innenkontur des Innenraums zylindrisch bzw. konisch ausgeführt.

Das Drehteil weist einen Durchgangskanal auf, der abhängig von der Drehposition des Drehteils bezüglich der Drehachse eine Schüttgut-Zuführöffnung des Gehäuses mit einer von mehreren Schüttgut-Abführöffnungen des Gehäuses zur Schüttgutförderung verbindet. An der Schüttgut-Zuführöffnung und/oder an den Schüttgut-Abführöffnungen können stutzenartige Verbindungselemente angeordnet und insbesondere einteilig an dem Gehäuse angeformt sein. Die Verbindungselemente können jeweils einen Verbindungsflansch aufweisen. Die Schüttgut-Zuführöffnung und die Schüttgut-Abführöffnungen definieren eine Förderebene. Die Drehachse des Drehteils ist quer und insbesondere senkrecht zur Förderebene orientiert.

Eine Schüttgut-Weiche gemäß Anspruch 2 ermöglicht eine zusätzlich verbesserte Halterung des mindestens einen Dichtungselements in der stirnseitigen Vertiefung. Das mindestens eine Dichtungselement ist mit einer Druckluftzuführung fluidtechnisch verbunden. Die Druckluftzuführung ermöglicht eine Druckluftbeaufschlagung des Dichtungselements in der stirnseitigen Vertiefung. Die Druckluftzuführung ist an eine Druckluftquelle anschließbar. Grundsätzlich sind auch andere Druckfluidquellen, insbesondere Druckgasquellen, anschließbar. In Folge der Druckluftbeaufschlagung kann das mindestens eine Dichtungselement zusätzlich in die Vertiefung eingepresst werden. Die Haltekraft des mindestens einen Dichtungselements in der Vertiefung ist verbessert.

Eine Ausführung des mindestens einen Dichtungselements gemäß Anspruch 3 ermöglicht eine verbesserte Abdichtung. Es wurde insbesondere erkannt, dass mit einer Kerbe in einem Dichtungsquerschnitt des Dichtungselements die geometriebedingte Flexibilität des Dichtungselements mit einer Dichtlippe zusätzlich erhöht ist. Aufgrund dieser verbesserten Flexibilität kann das mindestens eine Dichtungselement vorteilhaft in die stirnseitige Vertiefung eingepresst werden, insbesondere mittels des Spannelements und/oder durch Druckluftbeaufschlagung. Die Kerbe ist an dem Dichtungsquerschnitt V- oder U-förmig ausgeführt. Die Kontur des Dichtungsquerschnitts ist infolge der Kerbe im Wesentlichen K- oder B-förmig ausgeführt. Die Kerbe erstreckt sich insbesondere quer zu einer Tiefenrichtung der Vertiefung, insbesondere senkrecht zur Tiefenrichtung und insbesondere entlang einer Breitenrichtung der Vertiefung. Die Kerbe ist optional. Die Dichtlippe kann insbesondere ohne Kerbe ausgebildet sein. Die Dichtlippe ist insbesondere mit einem dünnwandigen Querschnitt ausgeführt und derart flexibel, dass sie sich bei einer Druckbeaufschlagung an der jeweiligen Dichtfläche anschmiegt. Die Dichtlippe ermöglicht eine unkomplizierte linienhafte oder flächenhafte Abdichtung des Dichtelements.

Eine Ausführung des Dichtungsquerschnitts gemäß Anspruch 4 gewährleistet eine zusätzlich verbesserte Abdichtung des Drehteils gegenüber dem Gehäuse, insbesondere in Umfangsrichtung bezüglich der Drehachse des Drehteils. Das mindestens eine Dichtungselement weist eine Gehäusedichtfläche auf, die unmittelbar an einer korrespondierenden Innenfläche des Gehäuses abdichtend anliegt. Die Gehäusedichtfläche ist insbesondere an einer Außenseite der Dichtlippe ausgebildet. Die Innenfläche des Gehäuses bildet eine Kontaktfläche. Die Gehäusedichtfläche weist insbesondere eine konvexe Außenkontur auf, die insbesondere halbkreisförmig und insbesondere kantenfrei ausgeführt ist. Die Gehäusedichtfläche ragt an der Vertiefung vor, insbesondere in radialer Richtung bezogen auf die Drehachse und wird insbesondere gegen die Gehäusedichtfläche gepresst. Das mindestens eine Dichtungselement wird insbesondere im Bereich der Gehäusedichtfläche zusätzlich elastisch deformiert, wodurch die Haltekraft in der Dichtungsnut zusätzlich erhöht ist.

Eine Ausführung des Dichtungsquerschnitts gemäß Anspruch 5 ermöglicht eine zusätzliche Funktionsintegration, insbesondere an dem Dichtungselement selbst. Der Dichtungsquerschnitt weist eine erste Dicke und eine zweite Dicke auf, die kleiner ist als die erste Dicke. Mit der ersten Dicke ist das mindestens eine Dichtungselement im radialen Grund der Vertiefung angeordnet. Das mindestens eine Dichtungselement ist stabil und zuverlässig in der Vertiefung gehalten. Insbesondere ist die erste Dicke mindestens so groß wie eine Breite der Vertiefung im Vertiefungsgrund. Insbesondere beträgt die erste Dicke mindestens 101 % der Breite der Vertiefung, insbesondere mindestens 102 %, insbesondere mindestens 105 %, insbesondere mindestens 110 % und insbesondere höchstens 115 %.

Die zweite Dicke ist kleiner als die Breite der Vertiefung und beträgt insbesondere höchstens 85 %, insbesondere höchstens 90 %, insbesondere höchstens 95 % und insbesondere höchstens 98 % der Nutbreite der Vertiefung. Insbesondere beträgt die zweite Dicke mindestens 30 % der Breite der Vertiefung und mindestens 50 % der Breite der Vertiefung. Aufgrund der zweiten Dicke ist das mindestens eine Dichtungselement in der Dichtungsnut vorteilhaft beweglich angeordnet. Das Verhältnis der der zweiten Dicke zur ersten Dicke beträgt insbesondere mindestens 0,75, insbesondere mindestens 0,8, insbesondere mindestens 0,85, insbesondere mindestens 0,9, insbesondere mindestens 0,95 und insbesondere höchstens 0,98.

Die zweite Dicke ist insbesondere im Bereich der Dichtlippe ausgebildet. Insbesondere kann die Dichtlippe in radialer Richtung bezüglich der Drehachse nach außen verjüngend ausgeführt sein, also mit einer, insbesondere kontinuierlich, abnehmenden zweiten Dicke.

Entlang der Tiefenrichtung der Vertiefung, also insbesondere in radialer Richtung bezogen auf die Drehachse des Drehteils ragt das mindestens eine Dichtungselement an der Vertiefung mit einer Vorsprungshöhe vor, die insbesondere mindestens 2 % der Tiefe der Vertiefung beträgt, insbesondere höchsten 20 %, insbesondere höchstens 15 %, insbesondere höchstens 10 % und insbesondere höchstens 5 %.

Eine Ausführung des mindestens einen Dichtungselements gemäß Anspruch 6 ermöglicht eine zusätzliche Funktionsintegration bei der Abdichtung des Drehteils. Das mindestens eine Dichtungselement ist eine umlaufende Formdichtung, die endlos ausgeführt ist. Die Anordnung der Formdichtung an dem Drehteil ist vordefiniert und fehlersicher möglich. Die Montage der Formdichtung an dem Drehteil ist vereinfacht. Die Formdichtung ist eindeutig an dem Drehteil, insbesondere um den Durchgangskanal herum, festgelegt. Die Formdichtung weist insbesondere zwei Axialabschnitte und zwei Umfangsabschnitte auf, die entlang der Formdichtung abwechselnd hintereinander angeordnet und miteinander verbunden sind. Die Umfangsabschnitte sind jeweils in Umfangsrichtung bezüglich der Drehachse und insbesondere entlang einer Kreislinie um die Drehachse in einer Ebene senkrecht zur Drehachse angeordnet. Die Umfangsabschnitte sind insbesondere in der stirnseitigen Vertiefung an dem Drehteil angeordnet.

Eine Ausführung des mindestens einen Spannelements gemäß Anspruch 7 ist unkompliziert. Eine Spannscheibe ermöglicht insbesondere eine vollumfängliche und insbesondere entlang des Umfangs gleichmäßige Klemmung des mindestens einen Dichtungselements in der Vertiefung. Das Spannelement ist ringförmig und insbesondere mit einem Ringabsatz ausgeführt. Das mindestens eine Spannelement ist insbesondere mit mindestens einer und insbesondere mit mehreren Befestigungsschrauben am Drehteil lösbar angeschraubt.

Eine Druckluftzuführung gemäß Anspruch 8 ist unkompliziert ausgeführt. Insbesondere weist die Druckluftzuführung einen Druckluftanschluss auf, an dem ein Ventil, insbesondere mit einer Rückschlagfunktion, angeordnet sein kann. Es können auch mehrere Druckluftanschlüsse vorhanden sein, die an dem Gehäuse und/oder an einem Gehäuse-Seitendeckel angeordnet sind. Mit dem mindestens einen Druckluftanschluss kann Druckluft oder ein anderes Gas gezielt in die Schüttgut-Weiche, insbesondere gezielt in das Gehäuse, zugeführt werden, um eine Druckluftbeauschlagung des mindestens einen Dichtungselements in der stirnseitigen Vertiefung zu gewährleisten. Der mindestens eine Druckluftanschluss ist robust ausgeführt und gewährleistet insbesondere eine unkomplizierte Zuführung von Druckluft, insbesondere mittels eines standardisierten Anschlusses.

Eine Schüttgut-Weiche mit einem Gehäuse gemäß Anspruch 9 vereinfacht die Zugänglichkeit des Drehteils im Gehäuse. Zusätzlich dienen stirnseitig, insbesondere lösbar angebrachte Gehäuse-Seitendeckel zur Definition und Begrenzung eines Druckraums im Gehäuse. Der jeweilige Druckraum ist stirnseitig zwischen dem Drehteil und dem Gehäuse-Seitendeckel begrenzt und mit dem mindestens einen Dichtungselement abgedichtet. Das mindestens eine Dichtungselement verhindert also nicht nur, dass Schüttgut, Fördergas und/oder Wasser aus dem druckbeaufschlagten Förderstrom in das Innere der Schüttgut-Weiche, insbesondere zwischen Gehäuse und Drehteil, gelangen können, sondern ermöglicht auch die zusätzliche Nutzung des stirnseitigen Bauraums im Gehäuse als Druckraum. Die Abdichtung des Druckraums erfolgt insbesondere dadurch, dass eine Dichtlippe des mindestens einen Dichtungselements an eine äußere Oberfläche des Gehäuses gepresst wird.

Insbesondere für den Fall, dass das mindestens eine Dichtungselement als umlaufende Formdichtung einteilig ausgeführt ist mit zwei Axialabschnitten und zwei Umfangsabschnitten, insbesondere gemäß Anspruch 6, und sich die Umfangsabschnitte insbesondere nur teilweise und insbesondere nicht vollständig entlang des Umfangs erstrecken, sind die jeweils stirnseitig angeordneten Druckräume miteinander verbunden. In dem Gehäuse ist insofern ein einziger Druckraum ausgeführt, der abgedichtet ist.

Eine Schüttgut-Weiche gemäß Anspruch 10 ermöglicht die vorteilhafte Nutzung der Druckräume. Es sind also zwei Druckräume beiderseits stirnseitig zwischen Drehteil und Gehäuse-Seitendeckel angeordnet. Die beiden Druckräume sind voneinander getrennt ausgeführt und insbesondere fluidtechnisch voneinander separiert. Insbesondere sind zwei Dichtungselemente vorhanden, die jeweils als umlaufende Formdichtung einteilig ausgeführt sind mit jeweils zwei Axialabschnitten und zwei Umfangsabschnitten, insbesondere gemäß Anspruch 6. Die Dichtungselemente sind derart an dem Drehteil angeordnet, dass ihre Umfangsabschnitte einander zu einer ringförmigen Dichtungsanordnung ergänzen. Insbesondere ist das Drehteil mit den jeweiligen Umfangsabschnitten der Dichtungselemente voll umfänglich gegenüber dem Gehäuse abgedichtet.

Es ist alternativ auch möglich, jeweils stirnseitig an dem Drehteil eine umlaufende, insbesondere geschlossene Ringdichtung anzubringen, die entsprechend eine separate Abdichtung des jeweiligen Druckraums ermöglicht, sodass zwei getrennte Druckräume jeweils stirnseitig vorliegen.

Eine Schüttgut-Weiche gemäß Anspruch 11 ermöglicht einen unmittelbaren und vereinfachten Druckausgleich zwischen den Druckräumen. Ein Druckausgleichselement ist insbesondere an dem Drehteil integral ausgeführt, insbesondere als Fluidverbindungselement und insbesondere als Fluidkanal. In Abhängigkeit der Geometrie des Drehteils kann der Fluidkanal als Rohrverbindung ausgeführt sein, die die beiden Stirnwände des Drehteils miteinander verbindet. Das Rohr ist parallel zur Drehachse des Drehteils orientiert. Das Rohr wird auch als Axialrohr bezeichnet. Bei einer Ausführung des Drehteils als Massivbauteil kann der Fluidkanal auch als Durchgangsbohrung ausgeführt sein.

Mindestens ein Drucksensor gemäß Anspruch 12 ermöglicht eine vorteilhafte Drucküberwachung des mindestens einen Druckraums. Es wurde insbesondere erkannt, dass diese Drucküberwachung vorteilhaft zur Funktionsüberwachung der Dichtungsanordnung genutzt werden kann. Ein unerwarteter Druckabfall in einem der Druckräume kann dadurch begründet sein, dass dieser nicht abgedichtet ist und damit eine Abdichtung des Drehteils im Gehäuse nicht gewährleistet ist. Die Überwachung eines entsprechenden Drucksignals dient also insbesondere zur Funktionsüberprüfung der Schüttgut-Weiche. Insbesondere sind mehrere Druckräume und insbesondere alle Druckräume jeweils mittels eines separaten Drucksensors unabhängig voneinander drucküberwacht. Dadurch ist eine gezielte Funktionsüberwachung ermöglicht. Für den Fall, dass die Druckräume fluidtechnisch unmittelbar miteinander verbunden sind, ist ein einziger Drucksensor ausreichend. Die Investitionskosten sind dadurch reduziert.

Sowohl die in den Patentansprüchen angegebenen Merkmale als auch die in dem Ausführungsbeispiel einer erfindungsgemäßen Schüttgut-Weiche angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstandes keine Einschränkung dar, sondern weisen im Wesentlichen lediglich beispielshaften Charakter auf.

Weitere Merkmale, Vorteile und Einzelheiten der Erfindung ergeben sich aus der nachfolgenden Beschreibung eines Ausführungsbeispiels anhand der Zeichnung. Es zeigen:
- Fig. 1: eine perspektivische Explosionsdarstellung einer erfindungsgemäßen Schüttgut-Weiche,
- Fig. 2: einen Querschnitt der Schüttgut-Weiche in Fig. 1 in einer Ebene senkrecht zur Drehachse des Drehteils,
- Fig. 3: eine Schnittdarstellung gemäß Schnittlinie III-III in Fig. 2,
- Fig. 4: eine vergrößerte Detaildarstellung des Details IV in Fig. 3.

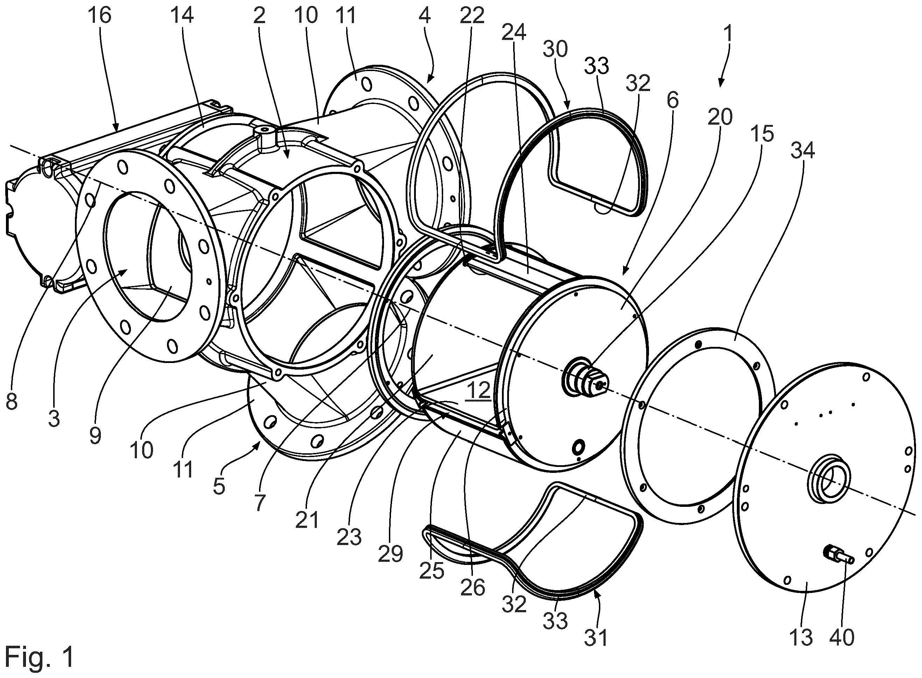

Eine in Fig. 1 bis 4 dargestellte Weiche 1 dient zur Förderung von Schüttgut. Die Weiche 1 ist eine Schüttgut-Weiche. Als Schüttgut dient insbesondere partikelförmiges und/oder pulverförmiges Material, insbesondere Kunststoffgranulat oder partikel- und/oder pulverförmige Lebensmittel. Das Schüttgut wird insbesondere pneumatisch gefördert, insbesondere unter Zugabe von Wasser und/oder unter Verwendung von feuchtem Schüttgut.

Die Weiche 1 ist als 3-Wege-Weiche ausgeführt. Die Weiche 1 weist ein Gehäuse 2 auf mit einer Schüttgut-Zuführöffnung 3 und zwei Schüttgut-Abführöffnungen 4, 5. Die Schüttgut-Zuführöffnung 3 dient zum Zuführen von Schüttgut in die Weiche 1. Die Schüttgut-Abführöffnungen 4, 5 dienen zum Abführen von Schüttgut aus der Weiche 1. Die Schüttgut-Zuführöffnung 3 und die Schüttgut-Abführöffnungen 4, 5, insbesondere deren Mittellinien, legen eine Förderebene fest.

Das Gehäuse 2 weist einen bezüglich einer Mittellängsachse 8 zylindrisch ausgeführten Innenraum 9 auf. Die Schüttgut-Zuführöffnung 4 und die Schüttgut-Abführöffnungen 4, 5 münden in den Innenraum 9. Das Gehäuse 2 weist jeweils einen der Schüttgut-Zuführöffnung 3 und den Schüttgut-Abführöffnungen 4, 5 zugeordneten Rohrstutzen 10 mit Befestigungsflansch 11 auf. Die Rohrstutzen 10 sind jeweils einteilig am Gehäuse angeformt. Mit den Rohrstutzen 10 und den Befestigungsflanschen 11 kann die Weiche 1 vorteilhaft in eine Förderleitung, insbesondere eine pneumatische Förderleitung, integriert und/oder daran angeschlossen werden. Das Gehäuse 2 ist insbesondere als Metallgussteil einteilig hergestellt. Es ist auch denkbar, die Rohrstutzen 10 an dem Gehäuse anzuschweißen.

In dem Gehäuse 2 ist ein Drehteil 6 angeordnet. Das Drehteil 6 ist bezüglich einer Drehachse 7, die senkrecht zur Förderebene orientiert ist, in dem Gehäuse drehbar angeordnet. Das Drehteil 6 ist bezüglich der Mittellängsachse 8 konzentrisch in dem Innenraum 9 angeordnet, so dass die Mittellängsachse 8 und die Drehachse 7 zusammenfallen.

Das Drehteil 6 ist bezüglich der Drehachse 7 zylindrisch ausgeführt. Das Drehteil 6 weist einen Durchgangskanal 12 auf, der sich quer und insbesondere senkrecht zur Drehachse 7 erstreckt. In Abhängigkeit der Drehposition des Drehteils 6 bezüglich der Drehachse 7 sind entweder die Schüttgut-Zuführöffnung 3 und die Schüttgut-Abführöffnung 4 oder die Schüttgut-Zuführöffnung 3 und die Schüttgut-Abführöffnung 5 mit dem Durchgangskanal für die Schüttförderung miteinander verbunden. Die jeweils andere Schüttgut-Abführöffnung 5 bzw. 4 ist dann durch das Drehteil 6 abgedichtet, also durch das Drehteil 6 zuverlässig abgesperrt.

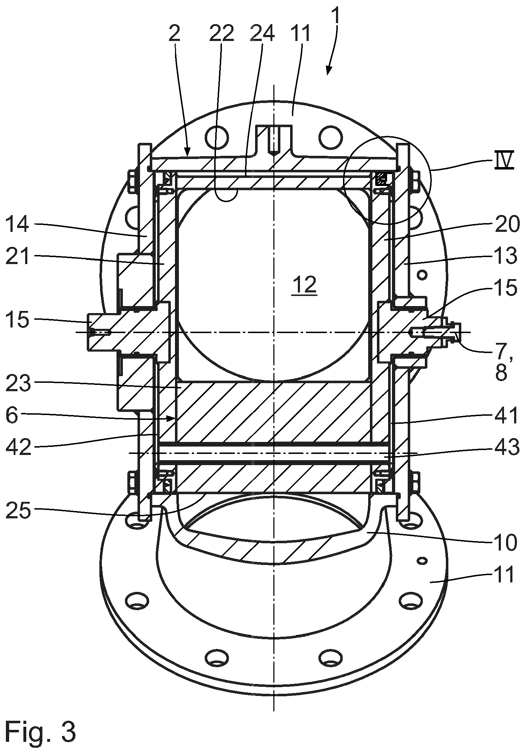

Jeweils stirnseitig bezüglich des zylindrischen Innenraums 9 weist das Gehäuse 2 einen ersten Gehäuse-Seitendeckel 13 und einen zweiten Gehäuse-Seitendeckel 14 auf. Die Gehäuse-Seitendeckel 13, 14 weisen jeweils eine konzentrisch zur Mittellängsachse 8 des Gehäuses 2 orientierte Lageröffnung auf, die zur Aufnahme von Drehlagerstutzen 15 des Drehteils 6 dient. Das Drehteil 6 ist um die Drehachse 7 drehbar gelagert in dem Gehäuse 2 angeordnet. An einem der Lagerstutzen 15, insbesondere der in Fig. 3 links dargestellte Lagerstutzen 15 ist mechanisch mit einem Antrieb 16, insbesondere einem Elektromotor gekoppelt. Für die mechanische Kopplung des Antriebs 16 mit dem Drehteil 6 ist insbesondere ein nicht dargestelltes Kupplungselement vorhanden.

Die Gehäuse-Seitendeckel 13, 14 sind jeweils stirnseitig am Gehäuse 2 lösbar befestigt, insbesondere mit Befestigungsschrauben 18 angeschraubt und mittels einer umlaufenden Seitendeckeldichtung 19 abgedichtet.

Der erste Gehäuse-Seitendeckel 13 weist einen Druckluftanschluss 40 auf zur Druckluftzuführung in einen Zwischenraum zwischen dem Gehäuse 2 und dem Drehventil 6 der Schüttgut-Weiche 1. Zusätzlich oder alternativ kann der Druckluftanschluss 40 auch an dem zweiten Gehäuse-Seitendeckel 14 und/oder im Gehäuse 2 ausgeführt sein. An dem Druckluftanschluss 40 kann ein nicht dargestelltes Ventil zur gezielten Druckbeaufschlagung angeordnet sein. Das Ventil kann eine Rückschlagfunktion aufweisen.

Das Drehteil 6 weist zwei gegenüberliegend angeordnete Stirnwände 20, 21 auf, an denen jeweils ein Lagerstutzen 15 befestigt, insbesondere eingepresst ist. Die erste Stirnwand 20 ist im eingebauten Zustand des Drehteils im ersten Gehäuse-Seitendeckel 13 zugewandt. Entsprechend ist die zweite Stirnwand 21 im eingebauten Zustand des Drehteils 6 dem zweiten Gehäuse-Seitendeckel 14 und insbesondere dem Antrieb 16 zugewandt. Die Stirnwände 20, 21 sind jeweils senkrecht zur Drehachse 7 orientiert. Zwischen der ersten Stirnwand 20, dem ersten Gehäuse-Seitendeckel 13 und dem Gehäuse 2 ist ein erster Druckraum 41 begrenzt. Entsprechend ist ein zweiter Druckraum 42 zwischen dem zweiten Gehäuse-Seitendeckel 14, der zweiten Stirnwand 21 und dem Gehäuse 2 begrenzt.

Die Druckräume 41, 42 sind mittels eines Axialrohres 43 fluidtechnisch unmittelbar miteinander verbunden. Das Axialrohr 43 erstreckt sich parallel zur Drehachse 7 des Drehteils 6 und ist insbesondere in entsprechenden Aufnahmebohrungen der Stirnwände 20, 21 gehalten. Das Axialrohr 43 bildet das Druckausgleichselement, insbesondere zwischen den Druckräumen 41, 42. Der Fluidkanal in Form des Axialrohres 43 ist optional. Es ist denkbar, dass die beiden Druckräume 41, 42 fluidtechnisch voneinander getrennt ausgeführt sind.

In dem ersten Druckraum 41 ist ein rein schematisch dargestellter Drucksensor 44 angeordnet, um den Druck innerhalb des ersten Druckraums 41 zu messen. Es ist auch denkbar, dass der Drucksensor 44 außerhalb des ersten Druckraums 41 angeordnet ist, insbesondere entlang oder parallel zu der an dem Druckluftanschluss 40 angeschlossenen Druckleitung. Jedenfalls steht der Drucksensor 44 mit dem ersten Druckraum 41 in geeigneter Fluidverbindung, die zur Druckmessung erforderlich ist. Der Drucksensor 44 kann zusätzlich oder alternativ in dem zweiten Druckraum 42 und/oder in dem Axialrohr 43 angeordnet sein. Der Drucksensor 44 steht mit einer nicht näher dargestellten Steuerungseinheit in Signalverbindung. Die Signalverbindung kann kabelgebunden und/oder kabellos erfolgen. Anhand des mittels des Drucksensors 44 gemessenen Drucksignals kann die Funktionsfähigkeit der Schüttgut-Weiche, insbesondere eine funktionierende Abdichtung zwischen dem Gehäuse 2 und dem Drehteil 6 überwacht werden. Bei einem, insbesondere abrupten, Druckabfall in einem der Druckräume 41, 42 ist von einer mangelnden und/oder fehlerhaften Abdichtung der Druckräume 41, 42 auszugehen.

Es ist auch denkbar, dass nur ein Druckraum 41 oder 42 vorhanden ist.

Die Stirnwände 20, 21 sind mit einer ersten Querwand 22 und einer zweiten Querwand 23 miteinander verbunden. Die Querwände 22, 23 erstrecken sich jeweils parallel zur Drehachse 7. Die Querwände 22, 23 begrenzen die Durchströmöffnung, also den Durchgangsquerschnitt, des Durchgangskanals 12. Im Bereich der Querwände 22, 23 ist zwischen den Stirnwänden 20, 21 jeweils eine Zylindermantel-Abschnittswand 24, 25 angeordnet, um dem Drehteil 6 in diesen Bereichen eine Zylindermantel-Außenfläche zu verleihen.

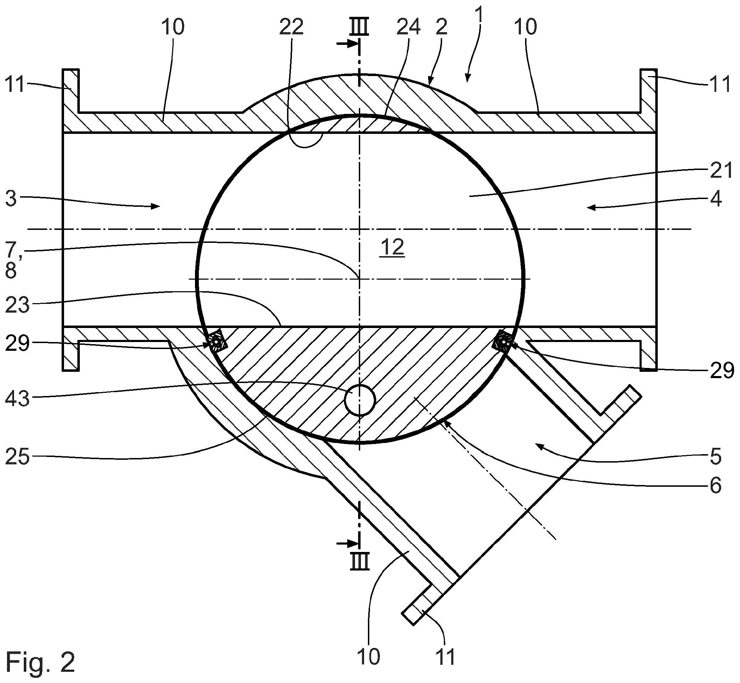

Wie insbesondere aus Fig. 2 deutlich wird, sind die erste Querwand 22 und die erste Zylindermantel-Abschnittswand 24 einteilig ausgeführt. Die zweite Querwand 23 und die zweite Zylindermantel-Abschnittswand 25 sind einteilig ausgeführt und bilden einen Hohlzylinderabschnitt. Die Stirnwände 20, 21 weisen jeweils eine umlaufende stirnseitige Vertiefung 26 auf, die als einteilig an der jeweiligen Stirnwand 20, 21 angeformt ist.

Die stirnseitige Vertiefung 26 bildet einen Absatz. Der Absatz ist in radialer Richtung bezüglich der Drehachse 7 nach außen hin offen. Die Vertiefung weist eine Tiefe t auf, die quer und insbesondere senkrecht zur Drehachse 7 orientiert ist.

Das Drehteil 6 weist zwei Dichtungsnuten 29 auf, die jeweils einer Innenfläche 28 des Gehäuses 2 zugewandt sind. Die Dichtungsnuten 29 erstrecken sich parallel zur Drehachse 7. Die Dichtungsnuten 29 verlaufen linear und werden auch als Längsnuten oder Außennuten bezeichnet. Die Dichtungsnut hat einen rechteckigen Nutquerschnitt mit einer Nutbreite und einer Nuttiefe. Der Nutquerschnitt ist radial zur Drehachse 7 orientiert, also mit der Nutöffnung in radialer Richtung der Innenfläche 28 des Gehäuses 2 zugewandt. Entsprechend ist die Nuttiefenrichtung radial bezüglich der Drehachse 7 orientiert. Die Nutbreitenrichtung ist senkrecht zur Radialrichtung orientiert, insbesondere tangential bezüglich eines Schnittpunktes der Radialrichtung mit der Innenfläche 28 des Gehäuses 2.

Das Drehteil 6 weist zwei Dichtungselemente 30, 31 auf. Die beiden Dichtungselemente 30, 31 sind jeweils aus einem Dichtungsmaterial hergestellt. Die Dichtungselemente 30, 31 weisen jeweils zwei Axialabschnitte 32 und jeweils zwei Umfangsabschnitte 33 auf, die abwechselnd und jeweils wechselweise derart aneinander angeordnet sind, dass die Dichtungselemente 30, 31 jeweils als endlos umlaufende Dichtungen ausgeführt sind.

Die Dichtungselemente 30, 31 sind jeweils mit den Axialabschnitten 32 in den Außennuten 29 angeordnet. Insbesondere sind beide Dichtungselemente 30, 31 jeweils mit ihrem Axialabschnitt 32 in den Außennuten 29 angeordnet. Die Axialabschnitte 32 erstrecken sich parallel zur Drehachse 7. Die Umfangsabschnitte 33 erstrecken sich jeweils in Umfangsrichtung um die Drehachse und sind an der Vertiefung 26 der Stirnwände 20, 21 angelegt. In Drehrichtung um die Drehachse 7 erstreckt sich der Umfangsabschnitt 33 des ersten Dichtungselements 30 um etwa 200°. Entsprechend beträgt der Drehwinkel um die Drehachse 7 bezüglich des Umfangsabschnitts 33 des zweiten Dichtungselements 31 etwa 160°. In Abhängigkeit der Position der Außennuten 29 in Umfangsrichtung bezüglich der Drehachse 7 können die entsprechenden Öffnungswinkel der Umfangsabschnitte 33 der Dichtungselemente 30, 31 auch variieren.

Die Umfangsabschnitte 33 sind an der Vertiefung 26 jeweils mittels einer ringförmigen Spannscheibe 34 axial gehalten und insbesondere in axialer Richtung angepresst. Die Spannscheibe 34 ist ein Spannelement. Die Spannscheibe 34 ist insbesondere mit Befestigungselementen, insbesondere Senkkopfschrauben 35, an den Stirnwänden 20, 21 lösbar befestigt. Die Spannscheibe 34 weist insbesondere einen Ringabsatz 45 auf, um die Montage und die Befestigung an der jeweiligen Stirnwand 20, 21 zu vereinfachen.

Die Spannscheibe 34 kann mit dem Ringabsatz 45 derart an den Stirnwänden 20, 21 angebracht werden, dass zusammen mit der Vertiefung 26 eine in Umfangsrichtung bezüglich der Drehachse 7 umlaufende Stirnseiten-Dichtungsnut 46 gebildet wird. In Abhängigkeit der axialen Tiefe des Ringabsatzes 45 ist eine zwischen der Vertiefung 26 und dem Ringabsatz 45 begrenzte Breite b der Vertiefung 26 veränderlich festlegbar.

Insbesondere ermöglicht die Spannscheibe 34 ein veränderliches Anpressen der Umfangsabschnitte 33 an die Stirnwand 20. Die Spannscheibe 34 und die Vertiefung 26 bilden eine Umfangsnut, in der der Umfangsabschnitt 33 angeordnet ist.

Die Dichtungselemente 30, 31 weisen einen Dichtungsquerschnitt mit einer Kerbe 36 auf. Die Kerbe 36 ist optional. Die Kerbe 36 ist im Wesentlichen V-förmig ausgeführt und bildet eine Kerbe für den Dichtungsquerschnitt. Die Kerbe 36 erstreckt sich bei dem in die jeweilige Stirnseiten-Dichtungsnut 46 eingesetzten Dichtungselement 30, 31 in Nutbreitenrichtung, also quer und insbesondere senkrecht zu Nuttiefenrichtung. Der Dichtungsquerschnitt ist im Wesentlichen B- oder K-förmig ausgeführt.

Der Dichtungsquerschnitt weist eine Nutgrunddichtfläche 37 auf. Die Nutgrunddichtfläche 37 ist eben ausgeführt und verläuft entlang einer seitlichen Nutflanke der Vertiefung 26 und zumindest bereichsweise entlang des Nutgrunds, also einer Bodenfläche der Vertiefung 26.

Der Dichtungsquerschnitt weist weiterhin eine gekrümmte, insbesondere konvex ausgeführte Gehäusedichtfläche 38 auf. Die Gehäusedichtfläche 38 dient zum abdichtenden Anliegen der Dichtungselemente 30, 31 an der Innenfläche 28 des Gehäuses 2. Insbesondere steht die Gehäusedichtfläche 38 an der Vertiefung 26 in radialer Richtung bezüglich der Drehachse 7 vor und wird durch den Kontakt an der Innenfläche 28 elastisch deformiert, also in die Vertiefung 26 hineingedrückt.

Die Kerbe 36 unterteilt den Dichtungsquerschnitt in einen Dichtungsinnenteil 41, mit dem Dichtungselement 30 im Nutgrund angeordnet ist, und ein Dichtungsaußenteil 42, mit dem das Dichtungselement 30 dem Gehäuse 2 zugewandt ist. Das Dichtungsinnenteil 41 weist eine erste Dicke D₁ und das Dichtungsaußenteil 42 eine zweite Dicke D₂ auf. Die zweite Dicke ist D₂ ist kleiner als die erste Dicke D₁.

Das Dichtungsaußenteil 42 bildet eine Dichtlippe, die insbesondere eine Strukturflexibilität aufweist. Die Gehäusedichtfläche 38 ist insbesondere an der Dichtlippe ausgeführt.

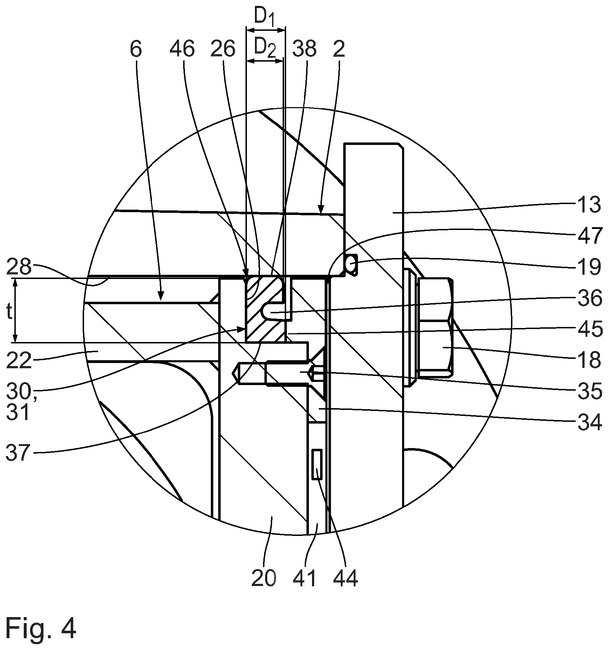

Dadurch, dass das Dichtungselement 30 in axialer Richtung bezüglich der Drehachse 7 zwischen der ersten Stirnwand 20 und der Spannscheibe 34 geklemmt wird, wird das Dichtungselement 30 elastisch deformiert und in radialer Richtung aus der Vertiefung 26 herausgedrückt und gegen die Innenfläche 28 des Gehäuses 2 gepresst. Die Dichtwirkung ist dadurch verbessert. Zusätzlich oder alternativ kann der erste Druckraum 41 und/oder der zweite Druckraum 42 mit Druckgas, insbesondere mit Druckluft, beaufschlagt werden. Wie sich insbesondere aus Fig. 4 ergibt, kann das entsprechende Druckmedium entlang eines Radialspaltes 47 zwischen der Spannscheibe 34 und dem ersten Gehäuse-Seitendeckel 13 bis zu dem Dichtungselement 30 gelangen. Dort kann das Druckfluid insbesondere in die Kerbe 36 gelangen und das Dichtungselement 30 derart elastisch deformieren, dass die Kerbe 36 in radialer Richtung aufgedrückt und das Dichtungselement 30 mit der Gehäusedichtfläche 38 gegen die Innenfläche 28 gepresst wird.

Bei der erfindungsgemäßen Schüttgut-Weiche stehen mehrere, insbesondere unabhängig voneinander betätigbare Mechanismen zur Verfügung, um das Dichtungselement 30 in der Vertiefung 26 mit erhöhtem Anpressdruck anzuordnen. Die Dichtungswirkung ist dadurch verbessert.

### Bezugszeichen

- 1 -: Weiche
- 2 -: Gehäuse
- 3 -: Schüttgut-Zuführöffnung
- 4 -: Schüttgut-Abführöffnung
- 5 -: Schüttgut-Abführöffnung
- 6 -: Drehteil
- 7 -: Drehachse
- 8 -: Mittellängsachse
- 9 -: Innenraum
- 10 -: Rohrstutzen
- 11 -: Befestigungsflansch
- 12 -: Durchgangskanal
- 13 -: Erster Gehäuse-Seitendeckel
- 14 -: Zweiter Gehäuse-Seitendeckel
- 15 -: Lagerstutzen
- 16 -: Antrieb
- 17 -: Kupplungselement
- 18 -: Befestigungsschraube
- 19 -: Seitendeckeldichtung
- 20 -: Erste Stirnwand
- 21 -: Zweite Stirnwand
- 22 -: Erste Querwand
- 23 -: Zweite Querwand
- 24 -: Erste Zylindermantel-Abschnittswand
- 25 -: Zweite Zylindermantel-Abschnittswand
- 26 -: Vertiefung
- 27 -: Verbindungsleiste
- 28 -: Innenfläche
- 29 -: Dichtungsnut
- 30 -: Erstes Dichtungselement
- 31 -: Zweites Dichtungselement
- 32 -: Axialabschnitt
- 33 -: Umfangsabschnitt
- 34 -: Spannscheibe
- 35 -: Senkkopfschrauben
- 36 -: Kerbe
- 37 -: Nutgrunddichtfläche
- 38 -: Gehäusedichtfläche
- 40 -: Druckluftanschluss
- 41 -: erster Druckraum
- 42 -: zweiter Druckraum
- 43 -: Axialrohr
- 44 -: Drucksensor
- 45 -: Ringabsatz
- 46 -: Stirnseiten-Dichtungsnut
- 47 -: Radialspalt
- D1 -: erste Dicke des Dichtungselements 30, 31
- D2 -: Zweite Dicke des Dichtungselements 30, 31
- t -: Tiefe der Vertiefung 26

## Patentansprüche

1. Schüttgut-Weiche umfassend
a. ein Gehäuse (2) mit einer Schüttgut-Zuführöffnung (3) und mit mehreren Schüttgut-Abführöffnungen (4, 5),
b. ein um eine Drehachse (7) im Gehäuse (2) drehbar angeordnetes Drehteil (6) mit einem Durchgangskanal (12), der abhängig von der Drehposition des Drehteils (6) bezüglich der Drehachse (7) die Schüttgut-Zuführöffnung (3) mit einer der Schüttgut-Abführöffnungen (4, 5) zur Schüttgutförderung verbindet,
c. eine Dichtungsanordnung zur umfangsseitigen Abdichtung des Drehteils (6) in dem Gehäuse (2) mit mindestens einem Dichtungselement (30, 31), das in einer stirnseitigen Vertiefung (26) an dem Drehteil (6) angeordnet ist, **dadurch gekennzeichnet, dass** das mindestens eine Dichtungselement (30, 31) mittels mindestens eines an dem Drehteil (6) festlegbaren Spannelements (34) in der Vertiefung (26) gehalten ist.

2. Schüttgut-Weiche gemäß Anspruch 1, **dadurch gekennzeichnet, dass** das mindestens eine Dichtungselement (30, 31) mit einer Druckluftzuführung fluidtechnisch verbunden ist.

3. Schüttgut-Weiche gemäß einem der vorstehenden Ansprüche, **dadurch gekennzeichnet, dass** das mindestens eine Dichtungselement (30, 31) eine Dichtlippe aufweist, die insbesondere durch einen Dichtungsquerschnitt mit einer Kerbe (36) ausgebildet ist.

4. Schüttgut-Weiche gemäß Anspruch 3, **dadurch gekennzeichnet, dass** der Dichtungsquerschnitt eine Gehäusedichtfläche (38) aufweist, mit der das jeweilige Dichtungselement (30, 31) an einer Innenfläche (28) des Gehäuses (2) abdichtend anliegt.

5. Schüttgut-Weiche gemäß Anspruch 3 oder 4, **dadurch gekennzeichnet, dass** der Dichtungsquerschnitt eine erste Dicke (D₁) und eine zweite Dicke (D₂) aufweist, die kleiner ist als die erste Dicke (D₁), wobei das mindestens eine Dichtungselement (30, 31) mit der ersten Dicke (D₁) im Nutgrund angeordnet ist.

6. Schüttgut-Weiche gemäß einem der vorstehenden Ansprüche, **dadurch gekennzeichnet, dass** das mindestens eine Dichtungselement (30, 31) als umlaufende Formdichtung einteilig ausgeführt ist mit zwei Axialabschnitten (32) und zwei Umfangsabschnitten (33).

7. Schüttgut-Weiche gemäß einem der vorstehenden Ansprüche, **dadurch gekennzeichnet, dass** das mindestens eine Spannelement als Spannscheibe (34) ausgeführt ist.

8. Schüttgut-Weiche gemäß gemäß einem der Ansprüche 2 bis 7, **dadurch gekennzeichnet, dass** die Druckluftzuführung einen Druckluftanschluss (40) an dem Gehäuse (2) und/oder an mindestens einem Gehäuse-Seitendeckel (13, 14) aufweist.

9. Schüttgut-Weiche gemäß einem der vorstehenden Ansprüche, **dadurch gekennzeichnet, dass** das Gehäuse (2) jeweils stirnseitig mittels eines Gehäuse-Seitendeckels (13, 14) verschlossen ist, wobei zwischen mindestens einem der Gehäuse-Seitendeckel (13, 14) und dem Drehteil (6) ein Druckraum (41, 42) begrenzt ist.

10. Schüttgut-Weiche gemäß Anspruch 9, **dadurch gekennzeichnet, dass** zwei Druckräume (41, 42) ausgebildet sind, die jeweils durch das mindestens eine Dichtungselement (30, 31) am Gehäuse (2) abgedichtet sind.

11. Schüttgut-Weiche gemäß Anspruch 10, **dadurch gekennzeichnet, dass** die Druckräume (41, 42) mittels eines Druckausgleichselements (43) fluidtechnisch unmittelbar miteinander verbunden sind.

12. Schüttgut-Weiche gemäß einem der Ansprüche 9 bis 11, **dadurch gekennzeichnet, dass** mindestens einer der Druckräume (41, 42) mit einem Drucksensor (44) fluidtechnisch verbunden ist.

## Claims

1. A bulk material diverter valve comprising
a. a housing (2) with a bulk material feed opening (3) and with multiple bulk material discharge openings (4, 5),
b. a rotary part (6) arranged rotatably about an axis of rotation (7) in the housing (2) and having a passage duct (12) which, depending on the rotary position of the rotary part (6) with respect to the axis of rotation (7), connects the bulk material feed opening (3) to one of the bulk material discharge openings (4, 5) for conveying bulk material,
c. a sealing arrangement for circumferential sealing of the rotary part (6) in the housing (2) with at least one sealing element (30, 31) which is arranged in an end face recess (26) on the rotary part (6), **characterized in that** the at least one sealing element (30, 31) is held in the recess (26) by means of at least one clamping element (34) which is definable at the rotary part (6).

2. The bulk material diverter valve according to claim 1, **characterized in that** the at least one sealing element (30, 31) is fluidically connected to a compressed air supply.

3. The bulk material diverter valve according to any one of the preceding claims, **characterized in that** the at least one sealing element (30, 31) has a sealing lip which is formed by a seal cross-section with a notch (36).

4. The bulk material diverter valve according to claim 3, **characterized in that** the seal cross-section has a housing sealing surface (38) with which the respective sealing element (30, 31) abuts against an inner surface (28) of the housing (2) in a sealing manner.

5. The bulk material diverter valve according to claim 3 or 4, **characterized in that** the seal cross-section has a first thickness (D₁) and a second thickness (D₂) which is smaller than the first thickness (D₁), wherein the at least one sealing element (30, 31) with the first thickness (D₁) is arranged in the groove base.

6. The bulk material diverter valve according to any one of the preceding claims, **characterized in that** the at least one sealing element (30, 31) is designed as a circumferential molded seal in one piece with two axial sections (32) and two circumferential sections (33).

7. The bulk material diverter valve according to any one of the preceding claims, **characterized in that** the at least one clamping element is designed as a clamping disc (34).

8. The bulk material diverter valve according to any one of claims 2 to 7, **characterized in that** the compressed air supply has a compressed air connection (40) on at least one of the housing (2) and/or at least one housing side cover (13, 14).

9. The bulk material diverter valve according to any one of the preceding claims, **characterized in that** the housing (2) is closed at each end face by means of a housing side cover (13, 14), wherein a pressure chamber (41, 42) is defined between at least one of the housing side covers (13, 14) and the rotary part (6).

10. The bulk material diverter valve according to claim 9, **characterized in that** two pressure chambers (41, 42) are formed, each of which is sealed by the at least one sealing element (30, 31) at the housing (2).

11. The bulk material diverter valve according to claim 10, **characterized in that** the pressure chambers (41, 42) are directly connected to each other by means of a pressure equalizing element (43).

12. The bulk material diverter valve according to any one of claims 9 to 11, **characterized in that** at least one of the pressure chambers (41, 42) is fluidically connected to a pressure sensor (44).

## Revendications

1. Aiguillage pour matières en vrac comprenant :
a. un boîtier (2) avec une ouverture d'alimentation en matières en vrac (3) et avec plusieurs ouvertures d'évacuation de matières en vrac (4, 5),
b. une pièce rotative (6) disposée de manière à pouvoir tourner autour d'un axe de rotation (7) dans le boîtier (2) et comportant un canal de passage (12) qui, en fonction de la position de rotation de la pièce rotative (6) par rapport à l'axe de rotation (7), relie l'ouverture d'alimentation en matières en vrac (3) à l'une des ouvertures d'évacuation de matières en vrac (4, 5) pour le transport de matières en vrac,
c. un dispositif d'étanchéité pour l'étanchéité circonférentielle de la pièce rotative (6) dans le boîtier (2) avec au moins un élément d'étanchéité (30, 31) qui est disposé dans un renfoncement frontal (26) sur la pièce rotative (6),
**caractérisé en ce que**
ledit au moins un élément d'étanchéité (30, 31) est maintenu dans le renfoncement (26) au moyen d'au moins un élément de serrage (34) pouvant être fixé sur la pièce rotative (6).

2. Aiguillage pour matières en vrac selon la revendication 1, **caractérisé en ce que** ledit au moins un élément d'étanchéité (30, 31) est relié fluidiquement à une alimentation en air comprimé.

3. Aiguillage pour matières en vrac selon l'une des revendications précédentes, **caractérisé en ce que** ledit au moins un élément d'étanchéité (30, 31) présente une lèvre d'étanchéité qui est en particulier formée par une section transversale d'étanchéité avec une encoche (36).

4. Aiguillage pour matières en vrac selon la revendication 3, **caractérisé en ce que** la section transversale d'étanchéité présente une surface d'étanchéité de boîtier (38) avec laquelle l'élément d'étanchéité respectif (30, 31) est en contact étanche sur une surface intérieure (28) du boîtier (2).

5. Aiguillage pour matières en vrac selon la revendication 3 ou 4, **caractérisé en ce que** la section transversale d'étanchéité présente une première épaisseur (D₁) et une deuxième épaisseur (D₂) qui est inférieure à la première épaisseur (D₁), ledit au moins un élément d'étanchéité (30, 31) présentant la première épaisseur (D₁) étant disposé dans le fond de rainure.

6. Aiguillage pour matières en vrac selon l'une des revendications précédentes, **caractérisé en ce que** ledit au moins un élément d'étanchéité (30, 31) est réalisé en une seule pièce sous la forme d'un joint moulé périphérique avec deux sections axiales (32) et deux sections circonférentielles (33).

7. Aiguillage pour matières en vrac selon l'une des revendications précédentes, **caractérisé en ce que** ledit au moins un élément de serrage est réalisé sous la forme d'une rondelle de serrage (34).

8. Aiguillage pour matières en vrac selon l'une des revendications 2 à 7, **caractérisé en ce que** l'alimentation en air comprimé présente un raccord d'air comprimé (40) sur le boîtier (2) et/ou sur au moins un couvercle latéral de boîtier (13, 14).

9. Aiguillage pour matières en vrac selon l'une des revendications précédentes, **caractérisé en ce que** le boîtier (2) est fermé à chaque extrémité frontale au moyen d'un couvercle latéral de boîtier (13, 14), une chambre de pression (41, 42) étant délimitée entre au moins l'un des couvercles latéraux de boîtier (13, 14) et la pièce rotative (6).

10. Aiguillage pour matières en vrac selon la revendication 9, **caractérisé en ce que** deux chambres de pression (41, 42) sont formées, qui sont chacune rendues étanches par ledit au moins un élément d'étanchéité (30, 31) sur le boîtier (2).

11. Aiguillage pour matières en vrac selon la revendication 10, **caractérisé en ce que** les chambres de pression (41, 42) sont directement reliées entre elles fluidiquement au moyen d'un élément d'équilibrage de pression (43).

12. Aiguillage pour matières en vrac selon l'une des revendications 9 à 11, **caractérisé en ce qu'**au moins l'une des chambres de pression (41, 42) est reliée fluidiquement à un capteur de pression (44).
